(19)

Europäisches
Patentamt
European
Patent Office
Office européen
des brevets

(11)     **EP 1 994 759 B1**

(12)     **EUROPEAN PATENT SPECIFICATION**

(45) Date of publication and mention
of the grant of the patent:
**23.05.2012  Bulletin 2012/21**

(51) Int Cl.:
***H04N 7/26*** (2006.01)

(21) Application number: **07734910.8**

(22) Date of filing: **09.03.2007**

(86) International application number:
**PCT/IB2007/001768**

(87) International publication number:
**WO 2007/105118 (20.09.2007 Gazette 2007/38)**

(54) **A METHOD AND DEVICE FOR ADAPTING A TEMPORAL FREQUENCY OF A SEQUENCE OF VIDEO IMAGES**

VERFAHREN UND EINRICHTUNG ZUM ANPASSEN EINER ZEITLICHEN HÄUFIGKEIT EINER SEQUENZ VON VIDEOBILDERN

PROCÉDÉ ET DISPOSITIF DESTINÉS À ADAPTER UNE FRÉQUENCE TEMPORELLE DE SÉQUENCE D'IMAGES VIDÉO

(84) Designated Contracting States:
**AT BE BG CH CY CZ DE DK EE ES FI FR GB GR HU IE IS IT LI LT LU LV MC MT NL PL PT RO SE SI SK TR**

(30) Priority:  **14.03.2006  FR 0650866**

(43) Date of publication of application:
**26.11.2008  Bulletin 2008/48**

(73) Proprietor: **Canon Kabushiki Kaisha**
**Ohta-ku**
**Tokyo (JP)**

(72) Inventors:
• **LE FLOCH, Hervé**
**F-35000 Rennes (FR)**

• **GISQUET, Christophe**
**F-35700 Rennes (FR)**

(74) Representative: **Petit, Maxime et al**
**Santarelli**
**14, Avenue de la Grande Armée**
**BP 237**
**75822 Paris Cedex 17 (FR)**

(56) References cited:
**WO-A-01/27763      JP-A- 2005 151 280**
**US-A- 5 978 029     US-A1- 2005 089 092**
**US-B1- 6 567 117    US-B1- 6 633 609**

EP 1 994 759 B1

## Description

The invention concerns a method and device for adapting a temporal frequency of a sequence of video images for the purpose of its transmission over a communication network.

When a video sequence is compressed, for example using a coding algorithm in accordance with the MPEG-4 standard, the quality of the images of the video sequence after decompression may prove to be bad.

This case is encountered generally when the images of the video sequence are highly textured and have strong motion and/or when the rates are low.

In such conditions, it is known to temporally downsample the video sequence, which amounts to deleting certain of the images of the sequence.

Thus, the quality of the images resulting from the downsampling is better in that the compression rate is lower.

If it is desired for example to compress into one Megabit 50 images in one second, it can be understood that with a temporal downsampling by a factor of two, only 25 images per second are compressed into one Megabit.

On account of this, the compression rate applied to each of the images of the video sequence is reduced and their quality is thereby improved.

The impression of fluidity resulting from such a downsampling is often less good but can be accepted in certain cases.

This may occur when it is considered that the clarity of the images resulting from the downsampling takes priority, or else that is it compensated for by a temporal interpolation after the decompression of the video sequence.

It is known from the document US 6 633 609 to improve the conventional methods of video coding.

Conventionally, each image of a video sequence is coded by a coder if the calculating resources of that coder are available. It may prove that the coder is already busy and cannot therefore process the current image of the video sequence. In this case, the current image is deleted and the same applies for the other images of the sequence when the coder is already active.

Since these image deletions are not regular, jerks arise in the sequence.

In this document it is proposed to delete images at regular intervals in order to avoid that phenomenon.

To that end, the method proposed aims to evaluate the mean time for compression of an image by the coder and to generate a sampling temporal frequency of the video which conforms to that mean time.

However, this method is not sufficiently effective since the frequency is so generated once and for all, even if the activity of the coder varies over time.

A coding method using rate-distortion models is also known from the document entitled "Rate-Distortion Models for Video Transcoding", SPIE Conference on Image and Video Communications and Processing, January 2003.

According to this method, a first rate-distortion model is used in the case of a simple quantization of the images.

In this case, the sampling temporal frequency of the video is assumed to be maximum and the value of the distortion depending on the intended rate is supplied by that first model.

The first rate-distortion model involves an equation linking the rate and the distortion which is simple and well-known to the person skilled in the art.

This method also involves a second rate-distortion model which is used in the case in which images are regularly deleted and it is then considered that the sampling temporal frequency is reduced in comparison with the preceding case.

As regards the second model, this presupposes that the images of the same scene are stationary and that the distortion of the missing images (the missing images are replaced by the closest decoded image from a temporal point of view) may be deduced using the property of stationarity.

To do this, an analytical temporal distortion model is generated from a parameter learning phase and a phase of segmenting the video into homogeneous scenes.

Thus, according to the teaching of this document, the two rate-distortion models provide, over a time interval, two measurements of the distortion, i.e. a mean distortion provided by the first model at maximum temporal resolution and a mean distortion provided by the second model and which takes into account the temporal downsampling of the images.

The decision to downsample the video sequence will then be taken on the basis of the distortion values calculated by those models.

It will be noted that this method is particularly complicated to implement, in particular as regards the learning and segmenting phases, and involves numerous calculations. Furthermore, it is based on an interpolation model which can prove to be of low reliability. US 656 7117 describes a method of adapting a temporal frequency of a sequence of video images for transmission over a network.

The present invention aims to mitigate at least one of the drawbacks mentioned above by providing to adapt the sampling temporal frequency of a video sequence in a simple manner.

To that end, the invention concerns a method of adapting a temporal frequency of a sequence of video images for the purpose of its transmission over a communication network, characterized in that images of the sequence having been sampled at a temporal frequency $f_1$, the method comprises a step of deciding as to the carrying out of a step of simulating a coding of images of the video sequence sampled at a temporal frequency $f_2 > f_1$, for the purpose of determining whether the sampling temporal frequency $f_1$ of the sequence can be increased, the decision being taken on the basis of at least one criterion relative to the resources of a communication apparatus able to perform the simulation step and/or on the basis of the evolution over time of the characteristics of the video sequence and/or of the network.

Thus, before deciding on an increase in the sampling temporal frequency, it will be decided whether it is opportune to carry out a simulation of coding at that frequency, this being done according to different conditions.

The invention is thus particularly flexible since it makes it possible to adapt the sampling frequency dynamically according to different conditions being met which may evolve over time.

Moreover, the invention is particularly simple to implement and proves to be more precise than the technique used in the prior art which involves rate-distortion models.

It will be noted that the video sequence may be characterized by an energy or a video activity which may be stronger or weaker and by a visual quality which may be higher or lower.

As regards the network, this may be characterized by its transmission capacity (e.g. bandwidth available, data transmission time, etc.) which may be better or worse (e.g. higher or lower bandwidth, greater or lesser data transmission time, etc.).

According to a feature, the evolution over time of the characteristics of the video sequence and/or of the network is noted with respect to the initial characteristics presented by the video sequence and/or by the network when it has been decided to use the temporal frequency $f_1$ for the sampling.

Observation will now be made of the temporal evolution of the context in which the sampling temporal frequency has been modified to pass to the frequency $f_1$. The context is defined by the state of the video sequence and/or of the network at a given moment.

According to a feature, the method comprises, prior to the step of deciding as to the carrying out of a simulating step, a step of storing in memory characteristics of the video sequence and/or characteristics of the network at a given time in relation with a sampling temporal frequency of the images of the video sequence.

It is thus provided to store in memory the context defined by the video sequence and/or the network in order to be able to follow its evolution over time.

It will be noted that the storage in memory of this context may take place before or after having modified the sampling temporal frequency to the value $f_1$.

This storage in memory may be useful in particular for reasons of following the evolution of the video context and/or of the network context, for example, for statistical purposes.

According to a feature, the step of storing in memory is carried out after it has been decided to reduce the sampling temporal frequency of the images of the video sequence from a frequency $f_0$ to the frequency $f_1$.

It will be noted that that the storage in memory may take place when the sampling temporal frequency of the sequence is reduced and/or, as mentioned above, at other times, for example, to obtain a history of the evolution of the context over time.

The recording of the video context and/or of the network context when the sampling frequency is reduced will make it possible later, on examining the evolution of that context, to decide whether or not to increase the sampling frequency of the sequence.

According to a feature, the method comprises, prior to the step of deciding as to the carrying out of a simulating step, the following steps:

- sampling images of the video sequence at a temporal frequency $f_0 > f_1$,
- coding the sampled images,
- determining the quality of the coded images,
- comparing the determined quality with respect to a predetermined threshold,
- according to the result of the comparison, deciding as to a reduction of the sampling temporal frequency of the images of the video sequence from the frequency $f_0$ to the frequency $f_1$.

Thus, the decision to reduce the sampling temporal frequency of the video sequence to the value $f_1$ has been taken after estimation of the quality of the coded sampled images.

It will be noted that when a step of memory storage is provided, this may be carried out at any time with respect to any one of the aforementioned steps of sampling, coding, quality determination, comparison and decision.

The recording may also take place in parallel with any one of those steps.

By way of example, when it is decided to reduce the sampling frequency from $f_0$ to $f_1$, the recording may take place before that decision is taken, after it, or after modification of the frequency, or in parallel with the frequency modification.

According to a feature, the method comprises a step of comparing between the current characteristics presented by the video sequence and/or the network and the initial characteristics presented by the video sequence and/or the network when it was decided to use the temporal frequency $f_1$ for the sampling.

Current characteristics means characteristics of the video sequence and/or of the network after passage of a certain time, consecutively to the first taking of a decision to modify the temporal frequency.

These current characteristics are, for example, those existing at the time of the decision taking as to the coding simulation.

This comparison makes it possible to determine the evolution over time of the features of the video sequence and/or of the network.

According to a feature, the step of comparing the characteristics is in particular performed in the form of a step of comparing the qualities of the video sequence obtained respectively with the current characteristics (current context) and initial characteristics (initial context) of that sequence.

It will be noted that this comparing step assumes that the quality of the video sequence in the initial context has been stored in memory and that it is determined in the current state.

According to a feature, the method comprises, according to the result of the comparing step, a step of deciding as to an increase in the sampling temporal frequency from $f_1$ to $f_2$.

It is thus possible to decide on the increase of the temporal frequency directly according to the result of the comparison of the current and initial characteristics and, more generally, according to the evolution over time of those characteristics, and thus to dispense with the coding simulation step.

This evolution provides an approximate indication which makes it possible to take a rapid decision. However, if according to the circumstances (e.g. type of video data to transmit) it is preferred to obtain more detail on the evolution of the context before deciding on an increase in frequency; then the prior step of coding simulation is preferable.

According to a feature, the method comprises a step of increasing the sampling temporal frequency, when the current characteristics of the video sequence and/or of the network have improved over time.

Thus, when the video and/or network context has favorably evolved, it is possible to envisage increasing the sampling temporal frequency directly, without having recourse to the coding simulation step.

This enables time to be saved and to reduce the calculation cost of the method.

According to a feature, when the current characteristics of the video sequence and/or of the network have improved over time, the carrying out of the step of simulating coding of sampled images at the temporal frequency $f_2 > f_1$ depends on the state of the resources of the communication apparatus with respect to a predetermined threshold.

When the video and/or network context has favorably evolved, the resources of the communication apparatus are taken into account before deciding on carrying out the coding simulation step.

It can however be envisaged in certain circumstances not to take into account those resources and nevertheless to carry out the coding simulation. This may be envisaged when there is no need to rapidly take a decision to increase the frequency or when the video data may possibly be coded more slowly.

According to a feature, the state of the resources of the communication apparatus being below the predetermined threshold, the method comprises a step of increasing the sampling temporal frequency without having recourse to the coding simulation step.

Thus, when the state of the resources (calculation capacity, memory space) of the communication apparatus is insufficient, it can be provided, in certain circumstances, to dispense with the coding simulation and to directly increase the sampling frequency.

It will however be noted that when the state of the resources permits, the coding simulation step can also be envisaged in order to evaluate the quality of the video sequence so coded in a simulated manner, before deciding on an increase in sampling frequency.

According to a feature, when the current characteristics of the video sequence and/or of the network have degraded over time, the coding simulation step is not carried out.

Thus, depending on the following of the video and/or network context, in particular when the context has degraded, it can be deduced thereby that the coding simulation step is of no use since the quality of the video sequence at an increased sampling frequency will very probably be insufficient.

According to another feature, the method comprises a step of simulating coding of images of the video sequence sampled at the temporal frequency $f_2 > f_1$ when the state of the resources of the communication apparatus is greater than a predetermined threshold.

Thus, when the state of the resources of the apparatus permits, a coding simulation is carried out.

More particularly, the simulation step is subdivided into several sub-steps:

- sampling images of the video sequence at the temporal frequency $f_2$,
- simulating coding of the sampled images,
- determining the quality of the coded images,
- comparing the determined quality with respect to a predetermined threshold,

- in case the threshold is exceeded, increasing the sampling temporal frequency of the images of the video sequence.

Thus, if the quality of the coded images arising from the simulation proves insufficient, the same sampling temporal frequency of the images of the video sequence is kept.

According to a feature, the characteristics of the video sequence are the video activity of the sequence, for example, the variance of the prediction errors, the variance of the motion vectors, and/or the quality of the video sequence.

This quality of the video sequence or of an image can be expressed with respect to the signal to noise ratio of the video sequence or of the image or of several images after coding.

Moreover, the characteristics of the network are for example defined by the bandwidth of the network.

The invention also concerns a device for adapting a temporal frequency of a sequence of video images for the purpose of its transmission over a communication network, characterized in that images of the sequence having been sampled at a temporal frequency $f_1$, the device comprises means for deciding as to the carrying out of a simulation of coding of images of the video sequence sampled at a temporal frequency $f_2 > f_1$, for the purpose of determining whether the sampling temporal frequency $f_1$ of the sequence can be increased, the decision being taken on the basis of at least one criterion relative to the resources of a communication apparatus able to perform the simulation step and/or on the basis of the evolution over time of the characteristics of the video sequence and/or of the network.

This device for implementing the method described above has the same advantages as it does.

The invention also relates to:

- an information carrier readable by a computer system, possibly wholly or partly removable, in particular a CD-ROM or magnetic medium, such as a hard disk or a diskette, or a transmissible medium such as an electrical or optical signal, said information carrier comprising instructions of a computer program, characterized in that it enables the implementation of the method briefly described above, when that program is loaded and executed by the computer system.
- a computer program loadable into a computer system, said program containing instructions enabling the implementation of the method briefly described above, when that program is loaded and executed by the computer system.

Other features and advantages will appear in the following description, which is given solely by way of non-limiting example and made with reference to the accompanying drawings, in which:

- Figure 1 is a diagram of a communication apparatus in which the invention may be implemented;
- Figure 2 is a schematic representation of the environment of the invention;
- Figure 3 is a schematic view of an algorithm for determining a temporal frequency of a sequence of video images according to the invention;
- Figure 4 is a schematic view of an algorithm for determining a temporal frequency of a sequence of video images according to a first embodiment of the invention;
- Figure 5 is a schematic view of an algorithm for determining a temporal frequency of a sequence of video images according to a second embodiment.

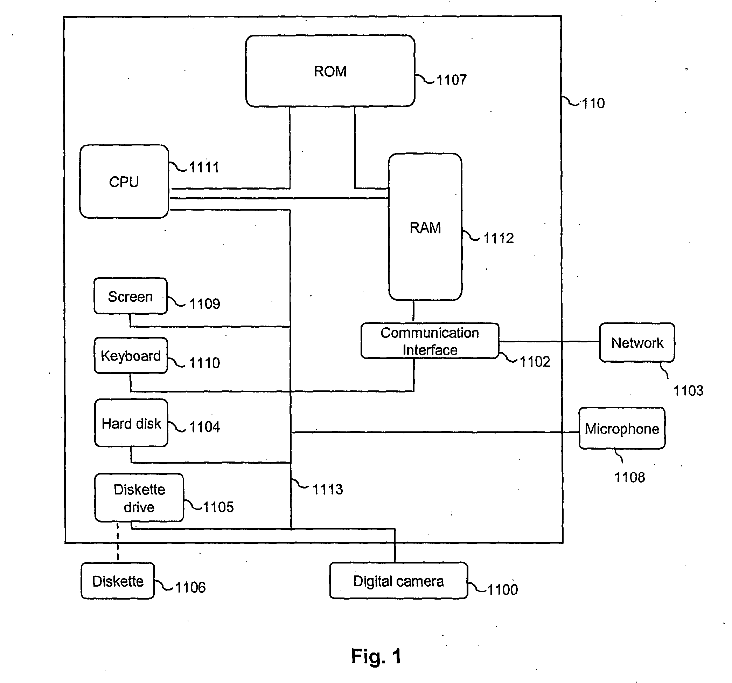

As represented in **Figure 1**, a device 110 for implementing the invention is for example implemented in the form of a micro-computer connected to different peripherals.

Among the peripherals are a digital video camera 1100 connected to a graphics card not shown and which provides data to be processed to the device 110.

It will be noted that the video camera may be replaced by any means for image acquisition or storage, or even by a scanner able to communicate data to the device 110.

The device 110 comprises a communication interface 1102 connected to a communication network 1103 over which digital data are transmitted.

The device 110 may receive those data to be processed from the network 1103 or may transmit them over the network after having processed them.

The device 110 also comprises a data storage means 1104 such as a hard disk.

A drive 1105 for a disc 1106 is also to be found in the device 110, it being possible for the disc to be a diskette, a CD-ROM or a DVD-ROM.

The disc 1106 just as for the hard disk 1104 may contain data processed according to the invention as well as a computer program or programs implementing the invention.

This program or programs may for example be contained in the storage medium 1106 and transferred into the device 110 to be stored there, for example, on the hard disk 1104.

According to a variant, the program or programs enabling device 110 to implement the invention may be stored in read only memory 1107 (ROM).

According to another variant, the program or programs may be received by the device 110 from the communication network 1103 to be stored there in identical manner to that which has already been described.

The device 110 is also connected to a microphone 1108 to process audio data.

A screen 1109 makes it possible to view the data to be processed or the processed data, or to serve as an interface with the user who may thus parameterize certain processing modes, using a keyboard 1110 or any other means such as a mouse or another pointing device.

The device also comprises a central processing unit 1111 (CPU) which executes the instructions relative to the implementation of the invention.

These instructions or lines of code are stored in the read only memory 1107 or in the other aforementioned storage means.

On powering up the device, the processing program or programs according to the invention which are stored in a non-volatile memory, for example the memory 1107 (ROM), are transferred into the random access memory 1112 (RAM) which will then contain the executable code of the program or programs, as well as registers for storing the variables necessary for the implementation of the invention.

More generally, a data storage means, readable by a computer or a micro-computer, stores the program or programs implementing the method according to the invention and, more particularly, a method of coding, transmission and decoding of data.

It will be noted that the data storage means may be integrated or not into the device 110 and may possibly be removable.

The device 110 also comprises a communication bus 1113 enabling the different aforesaid components to be linked together, whether they are integrated into the device 110 or connected thereto, and so makes it possible to establish the communication between those different elements.

The representation of the bus 1113 is not limiting and in particular the central processing unit 1111 is capable of communicating instructions to any component of the device 110 or component connected thereto, whether directly or via another component of the device.

It will be noted that the data processed by the device 110 are data from a sequence of video images.

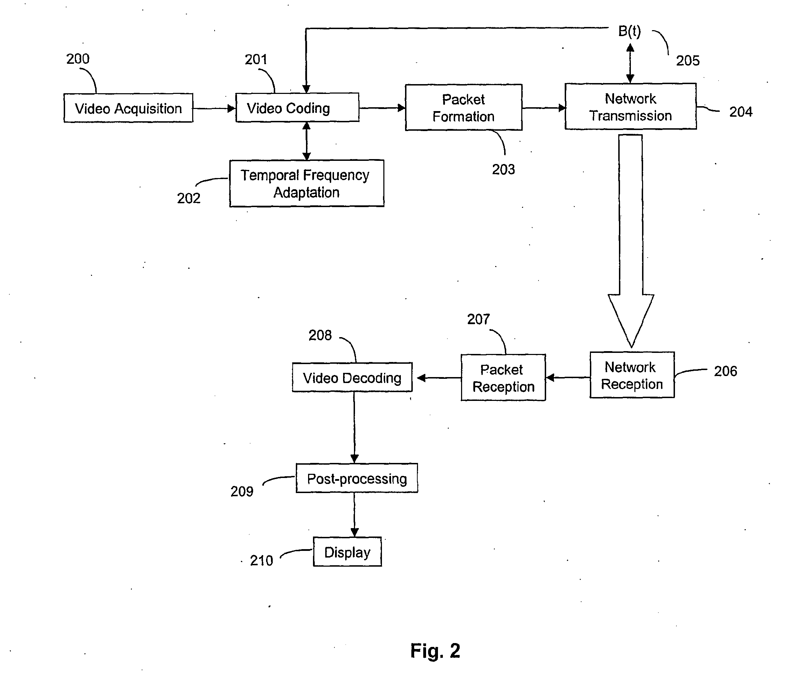

As represented in **Figure 2**, the invention applies in particular in the context of a transmission of a sequence of video images over a communication network from a communication apparatus which is, for example, identical to the device 110 of Figure 1.

Upstream of the transmission, a module 200 for acquiring a video sequence is provided, for example, in the form of a camera delivering images in a non-compressed format.

In the example illustrated it is assumed that the frequency of video acquisition is 30 images per second.

The images acquired by the module 200 are next transferred to the video coding module 201 which is, for example, a video coder in accordance with the MPEG-4 standard.

Each image compressed by the module 201 is next cut up into data packets by the module 203 and the packets so formed are transmitted over the network by the transmission module 204.

It should be noted that the transmission of the packets over the network is carried out in conformity with the constraint of bandwidth B(t) of the network, under the supervision of the control module 205.

The variable t is a time index and the bandwidth of the network which is determined at a given time may thus evolve over time.

It should furthermore be noted that the value of the bandwidth B(t) is known to the video coding module 201 which thus adapts the compression rate of the images, and thus their quality, so as to be able to transmit all the packets over the network. When the bandwidth value B(t) is too low, the compression rate is too high and the quality of the video strongly decreases.

In such a case, it is provided to adapt the sampling temporal frequency of the video sequence by deleting some of the images provided by the video acquisition module 200.

The module 202 has the role of determining the appropriate sampling temporal frequency of the images of the video sequence.

The video sequence of which the temporal frequency has been adapted one or more times by the module 202 is transmitted over the network.

The network is for example a wireless network.

It will be noted that the modules 200 to 205 form part of the communication apparatus referred to as sender:

The transmitted packets are successively received by a main data reception module 206 and by a packet reception module 207 in which they are assembled together to constitute a binary file.

The data constituting this file are then processed by the video data decoding module 208.

When the decoding of the images of the video sequence has been carried out, those images, or the video in its entirety, may undergo post-processing in order to improve the visual quality.

Such processing is carried out by the post-processing module 209 and may, for example, recover the initial temporal frequency of the video sequence via a temporal interpolation method.

The module 209 may furthermore implement methods of suppressing block effects and numerous other methods known to the person skilled in the art.

The display module 210 next carries out the display of the video sequence.

The modules 206 to 210 form part of a communication apparatus referred to as receiver and which is, for example, identical to the device 110 of Figure 1.

It will be noted that, in the context described above, the video acquisition and the coding thereof are performed in real time.

However, the adaptation of the temporal frequency of the video sequence according to the invention may also be carried out on a video that has already been compressed, for example, in MPEG-4 or other format.

In that case, transcoding of the compressed video is then necessary in order to adapt the size of the compressed video to the bandwidth constraints of the network.

This transcoding may consist in requantizing and/or modifying the temporal frequency.

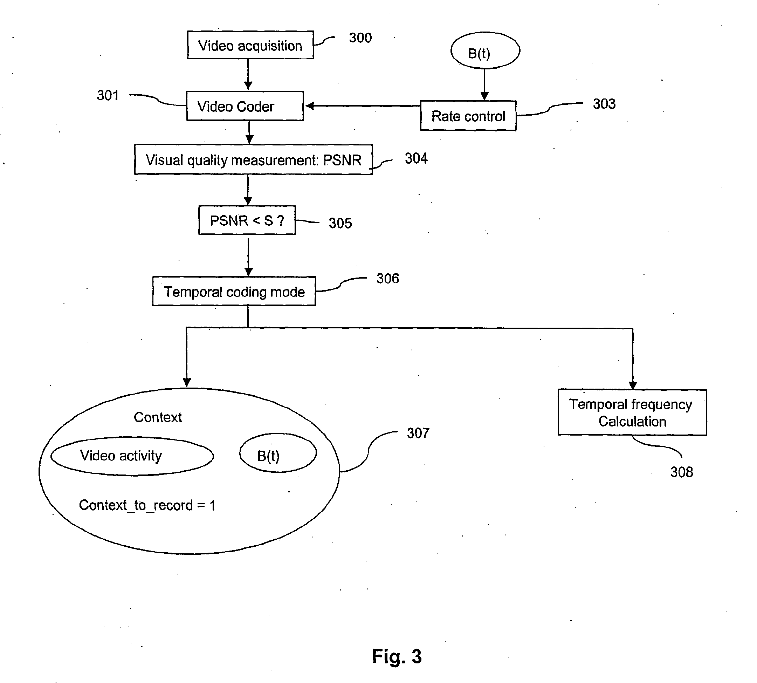

The algorithm represented in **Figure 3** illustrates in more detail a part of the different functionalities implemented by the module 202 of Figure 2.

It will be noted that in general, the module 202 of Figure 2 must take a decision as to the temporal frequency to adopt for the sampling of the video sequence on the basis of criteria which will be defined below. This decision thus leads either to downsampling of the images of the video sequence, or to increasing the sampling temporal frequency.

The algorithm of Figure 3 comprises a first step 300 of acquiring a video sequence, for example with a camera.

On acquiring the video sequence, the images thereof are sampled at a temporal frequency $f0$.

During the following step 301 this video sequence is coded and a step 303 enables control of the rate allocated to each image of the video sequence.

More particularly, during step 303, the rate control makes it possible to adapt the coding parameters taking into account the bandwidth $B(t)$ available over the communication network.

During the following step 304, the visual quality of the sampled and coded images is determined.

It is thus possible, for example, to use the PSNR (Peak Signal to Noise Ratio) as a measure of the visual quality of an image the video sequence.

The peak signal to noise ratio is determined by the following formula:

$$PSNR = 20Log_{10} (255/RMSE),$$

where RMSE designates the square root of the MSE and MSE designates the Mean Square Error on a color component of an image (such as the luminance or the chrominance), and is determined by the following formula, where L represents the width of the image and H its height:

$$MSE = \frac{1}{L \times H} \sum_{i=0}^{L-1} \sum_{j=0}^{H-1} \left( X(i,j) - X(\tilde{i},j) \right)^2$$

It will be noted that the Mean Square Error may be calculated directly during the quantization phase which is implemented at the video coding step 301.

After determining the visual quality of a coded image, comparison is carried out during the following step 305 of that quality to a predetermined threshold S.

When the visual quality of the image sampled at the frequency $f0$ and coded is less than the predetermined threshold, this means that the spatial quality of the images must be improved.

It will be noted that this threshold is determined empirically and depends on the type of the video data and/or on the envisaged application. Thus, for example, it may be equal to 29dB for an application related to video conferencing and may be lower for video surveillance applications.

To that end the sampling temporal frequency of the images of the video sequence should thus be reduced.

This decision is taken at step 306.

It will be noted that the case in which the visual quality of the coded images is greater than the threshold S has not been envisaged in Figure 3 in the interest of clarity.

However, in such a case the sampling frequency $f0$ of the video sequence is not modified.

As soon as the decision to reduce the frequency $f0$ to the frequency $f1$ has been taken, it is provided during the step 307 to record the conditions which have given rise to that decision being taken.

More particularly, storage in memory is for example made of the characteristics or properties of the video sequence and/or of the characteristics or properties of the network at a given time.

The context which thus led to reducing the sampling temporal frequency of the video sequence is stored in memory and a variable denoted "context_to_record" which initially has the value 0, is set to 1.

Thus, on coding the following image, if that variable has the value 1, the quality determined at step 304 (e.g. PSNR) is recorded as the initial context value and the variable is immediately reset to 0 after that recordal.

It will be noted that the context which is stored in memory at step 307 is for example the bandwidth B(t) available during the change in frequency and the video activity (the variance of the prediction errors, the variance of the motion vectors).

Further to the decision taking of step 306, step 308 provides for determining a new reduced temporal frequency $f_1$.

For example, the temporal frequency f0 is divided by two.

Thus, the algorithm of Figure 3 makes it possible to decide on a temporal downsampling on the basis of a given criterion and stores in memory a context in which that decision was taken and which will serve later to return to a higher sampling temporal frequency.

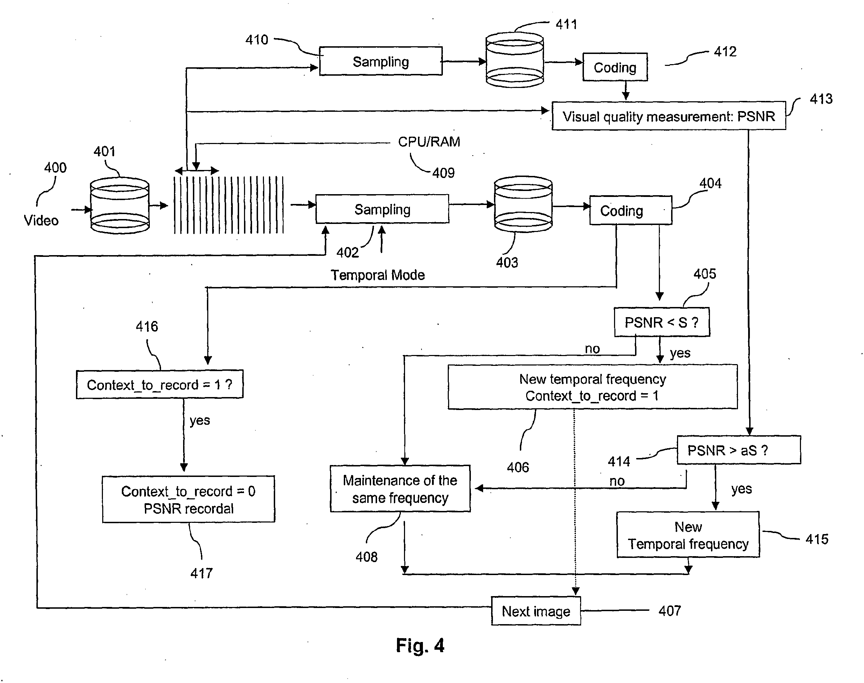

The algorithm of **Figure 4** which will now be described defines conditions in which the sampling frequency may be increased according to a first embodiment of the invention.

According to this algorithm, the decision to carry out a step of simulating coding of images of the video sequence sampled at a temporal frequency $f_2$ higher than $f_1$ is taken on the basis of at least one criterion relative to the resources of the communication apparatus which may perform the simulation step.

This simulating step is there to precisely determine, according to real conditions, whether a new frequency may be adopted for the sampling.

The algorithm of Figure 4 comprises a first step 400 of acquiring a video sequence with a camera and a step 401 is for example provided for temporarily storing the video data so acquired.

During the following step 402 downsampling of the video sequence is carried out at the reduced frequency $f_1$.

This is because, at step 306 of Figure 3 the decision to reduce the sampling frequency from $f_0$ to $f_1$ has already been taken.

The images of the sequence so sampled may next, for example, be stored temporarily at step 403, then be coded at step 404.

The following step 405 provides for determining, for example, the quality of an image so coded and to compare it to the threshold S as the two steps 304 and 305 of Figure 3 provide.

It will be noted that the processing envisaged here is made image by image.

When the quality obtained is less than the predetermined threshold, a new reduced temporal frequency is selected (step 406), and the conditions (context) in which that decision to reduce the frequency was taken are stored in memory (characteristics of the video sequence and/or characteristics of the network).

More particularly, the variable "context_to_record" is set to 1.

It will be noted that for more detail reference may be made to the description made above in relation to Figure 3 which defines the passage to a lower frequency during steps 307 and 308.

The following step 407 makes it possible to select the following image of the sequence sampled at the new frequency and the following operations are then carried out in identical manner:

- coding of that new image,
- determining the quality of that coded image and
- comparing with the threshold, as has just been described for the preceding image.

Returning to step 405, when the visual quality of the coded image is greater than the threshold, the following step 408 provides for keeping the same sampling frequency and the following image of the sequence sampled at the frequency $f_1$ is passed on to (step 407) as described above.

In parallel with these operations, it is provided at step 409 to analyze the state of the resources of the communication apparatus and, in particular, to determine whether calculating resources and memory space are available in that apparatus to perform a coding simulation.

For example, that availability may be determined with respect to a threshold defining a maximum level of occupancy of the calculating unit and of the memory space.

When the state of the resources so permits, a certain number of consecutive images of the video sequence are selected on leaving step 401. It will be noted that, according to the state of these resources, it may be decided to perform the coding simulation by adapting the number of images selected and, for example, merely using a few images (1, 2 or 3) if the resources are close to the threshold. The time for calculating the coding of these images may also be spread out over a lapse of time greater than that imposed by real time. This will induce a slight temporal offset in a possible decision to increase the temporal frequency, but this will enable a few more images to be taken into account during the decision taking (5 or 6 images).

The selected images are next downsampled at step 410 at a temporal frequency $f_2$ greater than the frequency $f_1$ used for the sampling of step 402.

The level of downsampling applied at step 410 is, for example, two times less than the level of downsampling applied at step 402.

The images so downsampled are for example stored temporarily at step 411, then coded at step 412.

It will be noted that to the extent that the coding steps 404 and 412 use the same images, some calculations which are carried out at step 412, during the simulation of the second coding, can be reused subsequently at the coding step 404.

During the following step 413, determination is made of the quality of each of the images of which the coding has been simulated, for example by determining their visual quality as described above at step 304 of Figure 3.

During the following step 414, comparison is made of the quality of the coded images to a threshold aS, with a>1, in order to determine whether the quality is considerably greater than the quality threshold S.

In practice, if there are several coded images this step is only carried out on the last selected image in order to ensure that the quality of the image used for this test is as stable as possible (and thus the most representative possible) of the qualities of all the selected images.

In the affirmative, step 414 is followed by step 415 which authorizes the increase in the temporal sampling frequency from $f_1$ to $f_2$.

For example, the rate of downsampling is then divided by two during this step.

Returning to step 414, when the quality of the images of which the coding has been simulated proves to be insufficient, it is decided not to modify the sampling frequency as already explained with reference to step 408 described above.

Thus, as has just been described at steps 409 to 415, the availability of the calculating resources is determined and, possibly, the memory space, in order to decide whether it is possible to simulate, in parallel with a first coding (step 404) made at a given temporal frequency, a second coding with a higher temporal frequency.

By way of example, if it is found that the coding of one second of video with the current temporal frequency uses 50% of the machine resources, it will be possible to select 0.5 seconds of video to simulate a second coding at steps 410 and 412.

It is known that in a video coder the estimation of motion between two images proves to be very costly in terms of calculations.

Taking this into account, it is thus possible to estimate the motion between two images during the coding step 404 on the basis of the motion which was estimated at the coding step 412.

Thus, if at step 412 the motion is calculated between the images I(0) and I(1), and between the images I(1) and 1(2), then by simple addition, the motion between I(0) and I(2) is estimated and may serve as a first approximation during the coding step 404. The contrary, i.e. the re-use at step 412 of calculations carried out at step 404, is also possible.

This make it possible to greatly reduce the search space and calculation time.

It should be noted that when the decision is taken to sample the images at the reduced frequency $f_1$ at step 402, the steps 307 and 308 of Figure 3 have been carried out.

Thus, the initial context has been recorded (for example: video activity and bandwidth) and the variable "context_to_record" has been set to 1.

The following image sampled at the frequency $f_1$ is then coded at step 404 before its visual quality is determined at step 405.

Nevertheless, in parallel with the coding or thereafter, step 416 is carried out which verifies whether the aforementioned variable is the value 1.

In the affirmative, the following step 417 provides for setting that variable to 0 and for recording the value of the last visual quality (PSNR) determined at step 304 of Figure 3.

It will however be noted that this recording (apart from that of the PSNR value) could alternatively take place at step 307 of Figure 3.

Generally, the visual quality of an image depends on the video activity and on the transmission capacity of the network. More particularly, for a given bandwidth, the higher the video activity, the lower its visual quality.

If, during the test of step 416, the variable is at 0 then no context (PSNR) is to be recorded since this signifies that the sampling frequency has not been reduced.

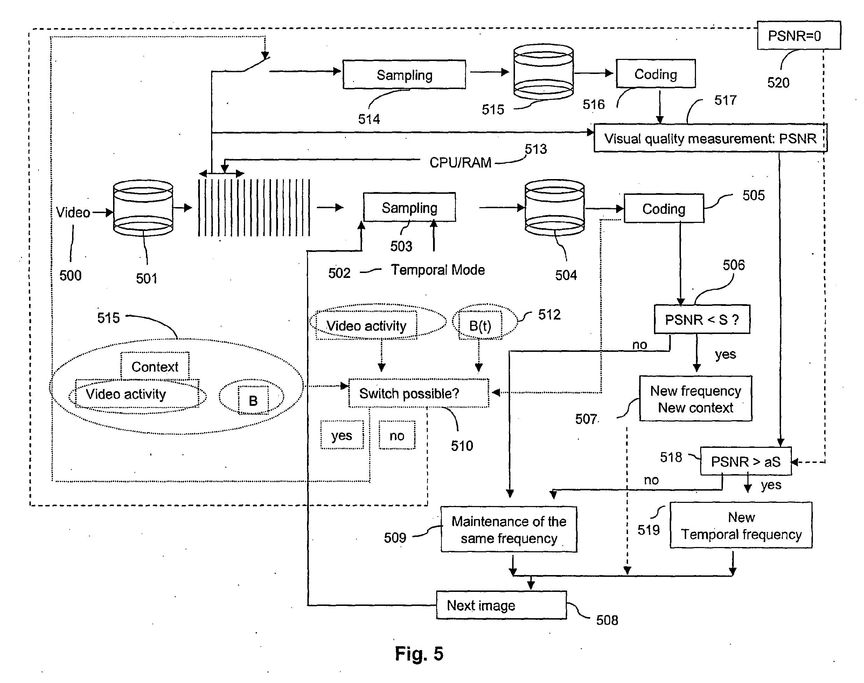

**Figure 5** illustrates an algorithm for adapting the sampling frequency of a video sequence according to the evolution over time of characteristics of the video sequence and/or of the network (context), in accordance with a second embodiment of the invention.

As will be seen below this algorithm makes it possible in particular, under certain circumstances, to reduce the use of the machine resources (calculation unit and/or memory space) while taking into account the temporal evolution of the aforementioned context.

The algorithm of Figure 5 comprises a first step 500 of acquiring a video sequence which is then stored at step 501, downsampled at the frequency $f_1$ at step 503 according to a decision to reduce the temporal frequency concerned at step 502 (corresponding to step 306 of Figure 3), stored at step 504, then coded at step 505.

All these steps are identical to the respective steps 400, 401, 402, 306, 403 and 404 of Figure 4.

Similarly, step 506 of comparing with respect to the threshold S of the quality of the coded images and the decision to reduce the temporal frequency of sampling and recording of the new context concerned at step 507, as well as the decision to keep the same sampling frequency concerned at step 509 are identical to the respective steps 405, 406 and 408 of Figure 4.

After these steps, processing of the following image is proceeded with at step 508 which is analogous to step 407 of Figure 4.

After coding the following image at step 505, step 510 is provided in order to determine the manner in which the context has evolved over time.

Depending on the result of this test step, it will be decided whether the simulation of a second coding at a higher sampling temporal frequency proves to be useful or not.

It will be noted that step 510 may occur at other locations in the algorithm, and not necessarily after the coding, when the context is characterized by the video activity and/or the transmission capacity of the network.

More particularly, during step 510 comparison is made between the context representing the video sequence and/or the network when it has been decided to reduce the sampling temporal frequency (context 515 recorded beforehand), and the so-called current context (video activity and current bandwidth 512) which represents the state of the video sequence and/or of the network at the present time or shortly before.

It will be noted that the initial context 515 was recorded at step 307 of Figure 3, the recording 515 also including the recording of the visual quality of the coded image (PSNR) just after (step 417 of Figure 4) reduction of the frequency to $f_1$.

The context is for example defined by the characteristics presented by the video sequence and/or by the network at a given time and it may, for example, be the visual quality (e.g. PSNR) of the video or of an image, the video activity (for example the variance of the prediction errors and/or the variance of the motion vectors), as well as the available bandwidth at the time of reference.

However, it is possible, during this step, to take into account only the visual quality of the images and thus to compare the visual quality of an image recorded initially at step 417 of Figure 4, that is to say when it has been decided to reduce the sampling temporal frequency of the video sequence, with the visual quality, referred to as current, of the image coded at step 505.

This coded image results from a sampling at the reduced frequency.

Thus, when the temporal evolution of the context shows that the current characteristics of the video sequence and/or of the network have improved over time, that is to say for example if the visual quality of the current video sequence is greater than that of the initial video sequence or if the bandwidth is greater than the prior bandwidth, then it is probable that the visual quality of the video sequence at a higher sampling temporal frequency is good.

In this case, the simulation can be envisaged of a second coding of images of the video sequence which are sampled at a temporal frequency greater than the frequency $f_1$ of step 503.

It will however be noted that this coding simulation may be subordinated to the state of the machine resources (calculation unit and/or memory space) available at a given time.

The step of verifying the state of the machine resources with respect to a predetermined threshold (level of occupancy of the calculation unit or of the memory space) is carried out at step 513 which is identical to step 409 of Figure 4.

It will however be noted that it is also possible to perform the step of coding simulation without taking into account the state of the machine resources.

Thus, on adopting a sampling frequency greater than the sampling frequency used at step 503, the steps are executed of downsampling 514, storage 515, coding 516, determining a visual quality 517 and comparing 518 that quality with the threshold aS.

These steps are identical to the respective steps 410, 411, 412, 413 and 414 of Figure 4.

If the visual quality of the video sequence at the greater frequency proves to be sufficiently good (PSNR>aS), then the following step 519 provides for adapting the frequency by selecting a greater temporal frequency which is, for example, that at which the coding simulation was carried out.

On the other hand, if the visual quality proves insufficient (PSNR $\leq$ aS), the sampling frequency used at step 503 is kept (step 509).

It should be noted that when the state of the machine resources used at step 513 proves to be less than the predetermined threshold (level of occupancy), it is possible to envisage directly increasing the sampling temporal frequency without having recourse to the coding simulation provided at steps 514 and following.

Thus calculation time is saved and decision speed is increased.

Returning to the comparing step 510, when the context has degraded over time, which results, for example, in a current visual quality (PSNR) of the video sequence which is less than or equal to the visual quality of the video sequence at the time the sampling temporal frequency was reduced, it is then very probable that the visual quality of the video sequence at a higher temporal frequency will be insufficient.

More particularly, this is explained by the fact that the current context proves to be less good than that which had already led to a reduction in the temporal frequency.

In this case, the coding simulation provided at steps 514 and following proves to be of no use and step 510 is followed by step 520 which resets the value of the determined visual quality (PSNR) to 0. Step 520 is then followed by step 518 already described earlier and which, given the value of the PSNR, directly leads to step 509 of keeping the same sampling frequency.

It will also be noted that the recording of the context via the variable "context_to_record" is carried out in an identical manner to that which was described with reference to Figures 416 and 417 of Figure 4.

It should be noted that when a higher sampling temporal frequency is selected, for example when it is doubled, the current context corresponds to the context which was recorded during the previous reduction in sampling temporal frequency.

**Claims**

1. A method of adapting a temporal sampling frequency of a sequence of video images in a communication apparatus for the purpose of its encoding and transmission over a communication network, **characterized in that** images of the sequence being sampled and encoded at a temporal sampling frequency $f_1$, the method comprises a step of deciding as to the carrying out of a step of simulating a coding of images of the video sequence sampled at a temporal sampling frequency $f_2 > f_1$, for the purpose of determining whether the temporal sampling frequency $f_1$ of the sequence can be dynamically increased, the decision being taken on the basis of at least one criterion (409 ; 513) relative to the resources of the communication apparatus (412 ; 516) and/or on the basis of the evolution over time of the characteristics of the video sequence and/or of the network (512, 515), the step of deciding and the step of simulating being performed in parallel with the sampling and encoding at the temporal sampling frequency $f_1$.

2. A method according to claim 1, **characterized in that** it comprises, prior to the step of deciding as to the carrying out of a simulating step, a step of storing (307) in memory characteristics of the video sequence and/or characteristics of the network at a given time in relation with a sampling temporal frequency of the images of the video sequence.

3. A method according to one of claims 1 to 2, **characterized in that** it comprises, prior to the step of deciding as to the carrying out of a simulating step, the following steps:

   - sampling (300) images of the video sequence at a temporal sampling frequency $f_0 > f_1$,
   - coding (301) the sampled images,
   - determining the quality (304) of the coded images,
   - comparing (305) the determined quality with respect to a predetermined threshold,
   - according to the result of the comparison, deciding (306) as to a reduction of the temporal sampling frequency of the images of the video sequence from the frequency $f_0$ to the frequency $f_1$.

4. A method according to one of claims 1 to 3, **characterized in that** it comprises a step of comparing (510) between the current characteristics (512) presented by the video sequence and/or the network and the initial characteristics (515) presented by the video sequence and/or the network when it was decided to use the temporal sampling frequency $f_1$ for the sampling.

5. A method according to claim 4, **characterized in that** it comprises, according to the result of the comparing step, a step of deciding (518) as to an increase in the temporal sampling frequency from $f_1$ to $f_2$.

6. A method according to claim 5, **characterized in that** the method comprises a step of increasing (519) the temporal sampling frequency, when the current characteristics of the video sequence and/or of the network have improved over time.

7. A method according to claim 4, **characterized in that**, when the current characteristics of the video sequence and/or of the network have improved over time, the decision to carry out the step of simulating coding of sampled images at the temporal frequency $f_2 > f_1$ depends on the state of the resources (513) of the communication apparatus with respect to a predetermined threshold.

8. A method according to claim 3, **characterized in that**, the state of the resources of the communication apparatus being below the predetermined threshold, the method comprises a step of increasing (507) the temporal sampling frequency without having recourse to the coding simulation step.

9. A method according to one of claims 1 to 7, **characterized in that** it comprises a step of simulating coding (412; 516) of images of the video sequence sampled at the temporal sampling frequency $f_2 > f_1$ when the state of the resources (409 ; 513) of the communication apparatus is greater than a predetermined threshold.

10. A method according to claim 9, **characterized in that** the simulation step is subdivided into several sub-steps:

   - sampling (410; 514) images of the video sequence at the temporal sampling frequency $f_2$,
   - simulating coding (412 ; 516) of the sampled images,
   - determining the quality (413 ; 517) of the coded images,
   - comparing (414; 518) the determined quality with respect to a predetermined threshold,
   - in case the threshold is exceeded, increasing (415 ; 519) the temporal sampling frequency of the images of the video sequence.

11. A device for adapting a temporal sampling frequency of a sequence of video images for the purpose of its encoding and transmission over a communication network, **characterized in that** images of the sequence being sampled and encoded at a temporal sampling frequency $f_1$, the device comprises means for deciding as to the carrying out of a simulation of coding of images of the video sequence sampled at a temporal sampling frequency $f_2 > f_1$, in parallel with the sampling and encoding at the temporal frequency $f_1$, for the purpose of determining whether the temporal sampling frequency $f_1$ of the sequence can be dynamically increased, the decision being taken on the basis of at least one criterion relative to the resources of the device and/or on the basis of the evolution over time of the characteristics of the video sequence and/or of the network, the means for deciding being adapted to decide as to the carrying out of a simulation of coding in parallel with the sampling and encoding at the temporal frequency $f_1$.

12. A device according to claim 11, **characterized in that** it comprises, means for storing in memory characteristics of the video sequence and/or characteristics of the network at a given time in relation with a temporal sampling frequency of the images of the video sequence.

13. A device according to one of claims 11 to 12, **characterized in that** it comprises means for comparing between the current characteristics presented by the video sequence and/or the network and the initial characteristics presented by the video sequence and/or the network when it was decided to use the temporal frequency $f_1$ for the sampling.

14. A device according to one of claims 11 to 13, **characterized in that** it comprises means for simulating coding of images of the video sequence sampled at the temporal sampling frequency $f_2 > f_1$, said means are adapted to simulate the coding when the state of the resources of the device is greater than a predetermined threshold.

15. A computer program that can be loaded into a computer system, said program containing instructions enabling the implementation of the method according to any one of claims 1 to 10, when that program is loaded and executed by the computer system.

**Patentansprüche**

1. Verfahren des Anpassens einer temporären Abtastfrequenz einer Sequenz von Videobildern in einer Kommunikationsvorrichtung zum Zwecke deren Verschlüsselung und Übertragung über ein Kommunikationsnetzwerk, **dadurch gekennzeichnet, dass** Bilder der Sequenz bei einer temporären Abtastfrequenz $f_1$ abgetastet und verschlüsselt werden, wobei das Verfahren einen Schritt des Entscheidens über das Ausführen eines Schritts des Simulierens eines Codierens von bei einer temporären Abtastfrequenz $f_2 > f_1$ abgetasteten Bildern der Videosequenz, zum Zwecke des Bestimmens, ob die temporäre Abtastfrequenz $f_1$ der Sequenz dynamisch erhöht werden kann, wobei die Entscheidung auf der Grundlage mindestens eines Kriteriums (409; 513) bezüglich den Ressourcen der Kommunikationsvorrichtung (412; 516) und/oder auf der Grundlage der Entwicklung über die Zeit der Eigenschaften der Videosequenz und/oder des Netzwerks (512, 515) getroffen wird, aufweist, wobei der Schritt des Entscheidens und der Schritt des Simulierens parallel mit dem Abtasten und Verschlüsseln bei der temporären Abtastfrequenz $f_1$ durchgeführt werden.

2. Verfahren gemäß Anspruch 1, **dadurch gekennzeichnet, dass** dieses vor dem Schritt des Entscheidens über das Ausführen eines Simulationsschritts einen Schritt des Speicherns (307) von Eigenschaften der Videosequenz und/oder Eigenschaften des Netzwerks zu einem vorgegebenen Zeitpunkt bezüglich einer temporären Abtastfrequenz der Bilder der Videosequenz in einen Speicher aufweist.

3. Verfahren gemäß einem der Ansprüche 1 bis 2, **dadurch gekennzeichnet, dass** dieses vor dem Schritt des Entscheidens über das Ausführen eines Simulationsschritts die folgenden Schritte aufweist:

- Abtasten (300) von Bildern der Videosequenz bei einer temporären Abtastfrequenz $f_0 > f_1$,
- Codieren (301) der abgetasteten Bilder,
- Bestimmen der Qualität (304) der codierten Bilder,
- Vergleichen (305) der bestimmten Qualität hinsichtlich eines vorbestimmten Schwellenwerts,
- gemäß dem Ergebnis des Vergleichs, Entscheiden (306) über eine Reduktion der temporären Abtastfrequenz der Bilder der Videosequenz von der Frequenz $f_0$ auf die Frequenz $f_1$.

4. Verfahren gemäß einem der Ansprüche 1 bis 3, **dadurch gekennzeichnet, dass** dieses einen Schritt des Vergleichens (510) zwischen den gegenwärtigen Eigenschaften (512), die durch die Videosequenz und/oder das Netzwerk dargestellt werden, und den Anfangseigenschaften (515), die durch die Videosequenz und/oder das Netzwerk dargestellt werden, wenn entschieden wurde, die temporäre Abtastfrequenz $f_1$ für das Abtasten zu verwenden, aufweist.

5. Verfahren gemäß Anspruch 4, **dadurch gekennzeichnet, dass** dieses gemäß dem Ergebnis des Vergleichsschritts einen Schritt des Entscheidens (518) über eine Erhöhung der temporären Abtastfrequenz von $f_1$ auf $f_2$ aufweist.

6. Verfahren gemäß Anspruch 5, **dadurch gekennzeichnet, dass** das Verfahren einen Schritt des Erhöhens (519) der temporären Abtastfrequenz aufweist, wenn die gegenwärtigen Eigenschaften der Videosequenz und/oder des Netzwerks sich über die Zeit verbessert haben.

7. Verfahren gemäß Anspruch 4, **dadurch gekennzeichnet, dass** wenn sich die gegenwärtigen Eigenschaften der Videosequenz und/oder des Netzwerks über die Zeit verbessert haben, die Entscheidung über das Ausführen des Schritts des Simulierens eines Codierens von abgetasteten Bildern bei der temporären Frequenz $f_2 > f_1$ von dem Zustand der Ressourcen (513) der Kommunikationsvorrichtung hinsichtlich eines vorbestimmten Schwellenwerts abhängt.

8. Verfahren gemäß Anspruch 3, **dadurch gekennzeichnet, dass** wenn der Zustand der Ressourcen der Kommunikationsvorrichtung unter dem vorbestimmten Schwellenwert liegt, das Verfahren einen Schritt des Erhöhens (507) der temporären Abtastfrequenz aufweist, ohne Rückgreifen auf den Codiersimulationsschritt.

9. Verfahren gemäß einem der Ansprüche 1 bis 7, **dadurch gekennzeichnet, dass** dieses einen Schritt des Simulierens einer Codierung (412; 516) von mit der temporären Abtastfrequenz $f_2 > f_1$ abgetasteten Bildern der Videosequenz aufweist, wenn der Zustand der Ressourcen (409; 513) der Kommunikationsvorrichtung größer als ein vorbestimmter Schwellenwert ist.

10. Verfahren gemäß Anspruch 9, **dadurch gekennzeichnet, dass** der Simulationsschritt in mehrere Unterschritte aufgeteilt ist:

- Abtasten (410; 514) von Bildern der Videosequenz bei der temporären Abtastfrequenz $f_2$,
- Simulieren eines Codierens (412; 516) der abgetasteten Bilder,
- Bestimmen der Qualität (413; 517) der codierten Bilder,
- Vergleichen (417; 518) der bestimmten Qualität hinsichtlich eines vorbestimmten Schwellenwerts,
- im Falle des Überschreitens des Schwellenwerts, Erhöhen (415; 519) der temporären Abtastfrequenz der Bilder der Videosequenz.

11. Vorrichtung zum Anpassen einer temporären Abtastfrequenz einer Sequenz von Videobildern zum Zwecke deren Verschlüsselung und Übertragung über ein Kommunikationsnetzwerk, **dadurch gekennzeichnet, dass** Bilder der Sequenz bei einer temporären Abtastfrequenz $f_1$ abgetastet und verschlüsselt werden, wobei die Vorrichtung eine Einrichtung zum Entscheiden über das Ausführen einer Simulation eines Codierens von bei einer temporären Abtastfrequenz $f_2 > f_1$ abgetasteten Bildern der Videosequenz parallel mit dem Abtasten und Verschlüsseln bei der

**EP 1 994 759 B1**

temporären Frequenz $f_1$, zum Zwecke des Bestimmens, ob die temporäre Abtastfrequenz $f_1$ der Sequenz dynamisch erhöht werden kann, aufweist, wobei die Entscheidung auf der Grundlage mindestens eines Kriteriums bezüglich der Ressourcen der Vorrichtung und/oder auf der Grundlage der Entwicklung über die Zeit der Eigenschaften der Videosequenz und/oder des Netzwerks getroffen wird, wobei die Einrichtung zum Entscheiden eingerichtet ist, eine Entscheidung über das Ausführen einer Simulation eines Codierens parallel mit dem Abtasten und Verschlüsseln bei der temporären Frequenz $f_1$ auszuführen.

12. Vorrichtung gemäß Anspruch 11, **dadurch gekennzeichnet, dass** diese eine Einrichtung zum Speichern von Eigenschaften der Videosequenz und/oder von Eigenschaften des Netzwerks zu einem vorgegebenen Zeitpunkt bezüglich einer temporären Abtastfrequenz der Bilder der Videosequenz in einen Speicher aufweist.

13. Vorrichtung gemäß einem der Ansprüche 1 bis 12, **dadurch gekennzeichnet, dass** diese eine Einrichtung zum Vergleichen zwischen den gegenwärtigen Eigenschaften, die durch die Videosequenz und/oder das Netzwerk dargestellt werden, mit den Anfangseigenschaften, die durch die Videosequenz und/oder das Netzwerk dargestellt werden, aufweist, wenn entschieden wurde, die temporäre Frequenz $f_1$ für das Abtasten zu Verwenden.

14. Vorrichtung gemäß einem der Ansprüche 11 bis 13, **dadurch gekennzeichnet, dass** diese eine Einrichtung zum Simulieren eines Verschlüsselns von bei der temporären Abtastfrequenz $f_2 > f_1$ abgetasteten Bildern der Videosequenz aufweist, wobei die Einrichtung eingerichtet ist, um das Codieren zu simulieren, wenn der Zustand der Ressourcen der Vorrichtung größer als ein vorbestimmter Schwellenwert ist.

15. Computerprogramm, das in ein Computersystem geladen werden kann, wobei das Programm Instruktionen enthält, welche die Implementierung des Verfahrens gemäß einem der Ansprüche 1 bis 10 ermöglicht, wenn das Programm durch das Computersystem geladen und ausgeführt wird.

## Revendications

1. Procédé d'adaptation d'une fréquence d'échantillonnage temporel d'une séquence d'images vidéo dans un appareil de communication dans le but de son codage et de sa transmission sur un réseau de communication, **caractérisé en ce que** des images de la séquence étant échantillonnées et codées à une fréquence $f_1$ d'échantillonnage temporel, le procédé comprend une étape de décision en ce qui concerne l'exécution d'une étape de simulation d'un codage d'images de la séquence vidéo échantillonnée à une fréquence $f_2 > f_1$ d'échantillonnage temporel, dans le but de déterminer si la fréquence $f_1$ d'échantillonnage temporel de la séquence peut être accrue dynamiquement, la décision étant prise sur la base d'au moins un critère (409 ; 513) relatif aux ressources de l'appareil de communication (412 ; 516) et/ou sur la base de l'évolution dans le temps des caractéristiques de la séquence vidéo et/ou du réseau (512, 515), l'étape de décision et l'étape de simulation étant effectuées en parallèle avec l'échantillonnage et le codage à la fréquence $f_1$ d'échantillonnage temporel.

2. Procédé selon la revendication 1, **caractérisé en ce qu'**il comprend, avant l'étape de décision en ce qui concerne l'exécution d'une étape de simulation, une étape de mémorisation (307) dans une mémoire de caractéristiques de la séquence vidéo et/ou de caractéristiques du réseau à un instant donné en relation avec une fréquence temporelle d'échantillonnage des images de la séquence vidéo.

3. Procédé selon l'une des revendications 1 à 2, **caractérisé en ce qu'**il comprend, avant l'étape de décision en ce qui concerne l'exécution d'une étape de simulation, les étapes suivantes :

   - d'échantillonnage (300) d'images de la séquence vidéo à une fréquence $f_0 > f_1$;
   - de codage (301) des images échantillonnées ;
   - de détermination de la qualité (304) des images codées ;
   - de comparaison (305) de la qualité déterminée par rapport à un seuil prédéterminé ;
   - selon le résultat de la comparaison, de décision (306) au sujet d'une réduction, de la fréquence $f_0$ à la fréquence $f_1$, de la fréquence d'échantillonnage temporel des images de la séquence vidéo.

4. Procédé selon l'une des revendications 1 à 3, **caractérisé en ce qu'**il comprend une étape de comparaison (510) entre les caractéristiques actuelles (512) présentées par la séquence vidéo et/ou le réseau et les caractéristiques initiales (515) présentées par la séquence vidéo et/ou le réseau lorsqu'il a été décidé d'utiliser pour l'échantillonnage la fréquence $f_1$ d'échantillonnage temporel.

14

**5.** Procédé selon la revendication 4, **caractérisé en ce qu'**il comprend, selon le résultat de l'étape de comparaison, une étape de décision (518) au sujet d'une augmentation, de $f_1$ à $f_2$ de la fréquence d'échantillonnage temporel.

**6.** Procédé selon la revendication 5, **caractérisé en ce que** le procédé comprend une étape d'augmentation (519) de la fréquence d'échantillonnage temporel, lorsque les caractéristiques actuelles de la séquence vidéo et/ou du réseau se sont améliorées dans le temps.

**7.** Procédé selon la revendication 4, **caractérisé en ce que**, lorsque les caractéristiques actuelles de la séquence vidéo et/ou du réseau se sont améliorées dans le temps, la décision d'effectuer l'étape de simulation de codage d'images échantillonnées à la fréquence temporelle $f_2 > f_1$ dépend de l'état des ressources (513) de l'appareil de communication par rapport à un seuil prédéterminé.

**8.** Procédé selon la revendication 3, **caractérisé en ce que**, l'état des ressources de l'appareil de communication étant au-dessous du seuil prédéterminé, le procédé comprend une étape d'augmentation (507) de la fréquence d'échantillonnage temporel sans avoir de ressource à l'étape de simulation de codage.

**9.** Procédé selon l'une des revendications 1 à 7, **caractérisé en ce qu'**il comprend une étape de simulation de codage (412 ; 516) d'images de la séquence vidéo échantillonnée à la fréquence $f_2 > f_1$ d'échantillonnage temporel lorsque l'état des ressources (409 ; 513) de l'appareil de communication est plus grand qu'un seuil prédéterminé.

**10.** Procédé selon la revendication 9, **caractérisée en ce que** l'étape de simulation est subdivisée en plusieurs sous-étapes :

- d'échantillonnage (410 ; 514) d'images de la séquence vidéo à la fréquence $f_2$ d'échantillonnage temporel ;
- de simulation de codage (412 ; 516) des images échantillonnées ;
- de détermination de la qualité (413 ; 517) des images codées ;
- de comparaison (414 ; 518) de la qualité déterminée par rapport à un seuil prédéterminé ;
- dans le cas où le seuil est dépassé, d'augmentation (415 ; 519) de la fréquence d'échantillonnage temporel des images de la séquence vidéo.

**11.** Dispositif destiné à adapter une fréquence d'échantillonnage temporel d'une séquence d'images vidéo dans le but de son codage et de sa transmission sur un réseau de communication, **caractérisé en ce que** des images de la séquence étant échantillonnées et codées à une fréquence $f_1$ d'échantillonnage temporel, le dispositif comprend un moyen de décision en ce qui concerne l'exécution d'une simulation de codage d'images de la séquence vidéo échantillonnée à une fréquence $f_2 > f_1$ d'échantillonnage temporel, en parallèle avec l'échantillonnage et le codage à la fréquence temporelle $f_1$, dans le but de déterminer si la fréquence $f_1$ d'échantillonnage temporel de la séquence peut être accrue dynamiquement, la décision étant prise sur la base d'au moins un critère relatif aux ressources du dispositif et/ou sur la base de l'évolution dans le temps des caractéristiques de la séquence vidéo et/ou du réseau, le moyen de décision étant apte à décider au sujet de l'exécution d'une simulation de codage en parallèle avec l'échantillonnage et le codage à la fréquence temporelle $f_1$.

**12.** Dispositif selon la revendication 11, **caractérisé en ce qu'**il comprend un moyen destiné à mémoriser dans une mémoire des caractéristiques de la séquence vidéo et/ou des caractéristiques du réseau à un instant donné en relation avec une fréquence temporelle d'échantillonnage des images de la séquence vidéo.

**13.** Dispositif selon l'une des revendications 11 à 12, **caractérisé en ce qu'**il comprend un moyen destiné à comparer les caractéristiques actuelles présentées par la séquence vidéo et/ou le réseau et les caractéristiques initiales présentées par la séquence vidéo et/ou le réseau lorsqu'il a été décidé d'utiliser pour l'échantillonnage la fréquence temporelle $f_1$.

**14.** Dispositif selon l'une des revendications 11 à 13, **caractérisé en ce qu'**il comprend des moyens destinés à simuler le codage d'image de la séquence vidéo échantillonnée à la fréquence $f_2 > f_1$ d'échantillonnage temporel, lesdits moyens étant aptes à simuler le codage lorsque l'état des ressources du dispositif est plus grand qu'un seuil prédéterminé.

**15.** Programme informatique qui peut être chargé dans un système informatique, ledit programme contenant des instructions permettant la mise en oeuvre du procédé selon l'une quelconque des revendications 1 à 10, lorsque ce programme est chargé et exécuté par le système informatique.

**Fig. 1**

EP 1 994 759 B1

**Fig. 2**

EP 1 994 759 B1

Fig. 3

Video 400

401

Sampling 402

Temporal Mode

Sampling 410

411

Coding 412

Visual quality measurement: PSNR 413

CPU/RAM 409

403

Coding 404

PSNR < S ? 405

New temporal frequency
Context_to_record = 1 406

PSNR > aS ? 414

yes

New Temporal frequency 415

no

Maintenance of the same frequency 408

Next image 407

Context_to_record = 1 ? 416

yes

Context_to_record = 0
PSNR recordal 417

Fig. 4

Fig. 5

EP 1 994 759 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6633609 B
- US 6567117 B